# EUROPEAN PATENT APPLICATION

(11) **EP 1 277 629 A1**
(43) Date of publication of application: **22.01.2003**
(21) Application number: 01116261.7
(22) Date of filing: 05.07.2001
(51) Int. Cl.: B60R 21/34

(54) **Energy absorption system**

(71) Applicant: Ford Global Technologies, Inc., Dearborn, Michigan 48126 (US)
(72) Inventor: Ericsson, Mattias, 43254 Varberg (SE)
(74) Representative: Lindberg, Klas Valter Bo

(57) **Abstract**

This invention relates to an energy absorption system (1) comprising at least two connecting elements (2) arranged in a motor vehicle (20). The connecting elements (2) are mutually connected by bridge elements (3) propagating substantially in an intended deformation direction of the energy absorption system (1). The energy absorption system (1) comprises a retaining element (4) arranged substantially perpendicular to said bridge elements (3). When the energy absorption system (1) is subject to a force impact in the intended deformation direction, said retaining element (4) is releasable at a given level of force impact, causing a controlled deformation of said energy absorption system. The invention also relates to vehicle comprising such an energy absorption system (1).

## Description

### Field of the Invention

An energy absorption system comprising at least two connecting elements arranged in a motor vehicle, wherein said connecting elements are mutually connected by bridge element.

### Technical Background

Collisions between pedestrians and moving motor vehicles are generally quite serious. Even at low speeds serious injury may be caused to a pedestrian involved in such a collision.

In particular the construction of front hoods for motor vehicles has been subject to development. It will be appreciated that the front hood, while absorbing the impact, has only a limited opportunity to absorb the impact in the event of a collision with a pedestrian because of the presence of the engine block beneath the front hood. If the impact is not absorbed sufficiently quickly, the pedestrian will become injured upon the engine block. On the other hand it is desirable for the manufacturer to produce stiff cars for a number of reasons.

There has heretofore been proposed in WO 00/69704 A2 a front hood assembly of a motor vehicle, wherein according to said application the front hood is hinged to the chassis of the motor vehicle via a hinge. Said hinge is plastically deformed under the impact of a collision with a pedestrian in order to absorb energy.

One issue of the known assembly is that it is difficult to control the behaviour of plastic deformation of the hood hinge. Depending on the force impact the deformation behaviour of the assembly can vary quite a lot and may result in either too stiff or too soft a structure depending on the type of impact. This type of assembly is also sensitive to side impact, which may affect the intended deformation behaviour.

An alternative to the above outlined assembly is presented in JP 2000006846, wherein in a hood hinge attachment with support structure and fuse pins is described. When an object hits the hood, the fuse pins are sheared, allowing the hinge to move, causing the support structure to absorb the impact force and thereby prevent the rear portion of the hood from hitting the windshield.

According to this prior art, the energy from an object hitting the hood can be absorbed, although the energy absorption in that case is limited to a hinged hood. Further, this hood hinge attachment is also sensitive to side impact.

Another issue of both the above prior-art references is that it is primarily the hood itself and not surrounding sections that will absorb impact energy from an object in case of a collision. Thus, it is still an object to provide a safer front hood in case of collision with a pedestrian.

At the same time it is important to provide a device that is robust, simple and easy to manufacture and yet not overly costly.

### Summary of the Invention

The object of the present invention is to provide an energy absorption system that overcomes the above issues, and presents both the necessary robustness and stability to at least desired sections of the front hood of a vehicle as well as a deformation zone to absorb energy.

A further object of the present invention is to provide an energy absorption system that will provide a deformation zone for energy absorption when a predefined force is applied on a front hood section.

It is still a further object to provide an energy absorption system that achieves these and other objects but is yet inexpensive and especially simple to manufacture and install in a vehicle.

These and other objects are achieved by an energy absorption system according to claim 1. Preferred embodiments of the invention are defined in the dependent claims.

According to the invention there is provided an energy absorption system comprising at least two connecting elements arranged in a motor vehicle, wherein said connecting elements are mutually connected by bridge elements propagating substantially in the intended deformation direction of the energy absorption system, said energy absorption system comprising a retaining element arranged substantially perpendicular to said bridge elements and, when the energy absorption system being subject to a force impact, said retaining element being releasable at a given level of force impact, causing a controlled deformation of said energy absorption system. With a device according to the invention, it is possible to obtain an energy absorption system for a vehicle with the necessary robustness and stability as well as a deformation zone to absorb energy in at least desired sections of the front hood. The deformation length is sufficient to brake a pedestrian's head before it hits hard components. There is also accomplished an energy absorption system that will provide a deformation zone for energy absorption when a predefined force is applied on a front hood section.

According to the invention there is provided an energy absorption system, comprising at least two bridge elements that somewhere along their extensions deviate from the propagation direction of a straight line between said connecting elements, said deviation forming a predetermined deformation path of each of the bridge elements. The retaining element is designed to snap or break at a predetermined force impact, which is higher than the requirement for stability of the front hood but lower than the tolerance of a human skull in order to protect pedestrians in a collision against the front of a vehicle.

Preferably, the bridge elements are arranged at an angle relative to each other, providing side stiffness to the energy absorption system. By letting the bridge element form an angle a robust structure is obtained. The robustness of the device according to the invention will protect the predetermined deformation behaviour of the device from being damaged during e.g. side impacts etc.

In accordance with a preferred embodiment of the invention, the side stiffness of the energy absorption system is substantially greater than the force impact level value for the retaining element. This robustness against impact and especially side impact is obtained by letting a bridge element form a framework. In accordance with a second preferred embodiment a bridge element forms a sidewall.

Suitably the energy absorption system has three bridge elements connected to a connecting element, in their respective ends, said bridge elements being substantially perpendicular to each other at least close to their ends. By three bridge elements the energy absorption system will be given the necessary stability and yet be easy to manufacture and handle.

In a further embodiment of the invention the energy absorption system has four bridge elements connected to a connecting element, in their respective ends, said bridge elements being substantially perpendicular to each other at least close to their ends. This further embodiment of the invention provides a robust energy absorption system, which can easily be mounted in a vehicle at a desired location. The energy absorption system according to the present embodiment can be given a symmetrical design with preferably, but not necessarily, two pairs of mutually arranged bridge elements.

Further the energy absorption system preferably has bridge elements provided with at least one deviation, formed to cause the bridge elements to deform controllably outwards, in order to absorb energy, when said energy absorption system is subject to impact of a substantially vertical force. The deformation length is suitably substantially equal to the distance between the connecting elements of the energy absorption system before the deformation begins, meaning that the resulting device after energy absorption will be substantially flat. The design of the bridge element according to this embodiment of the invention will guide the energy absorption system to deform in a controllable manner.
In an alternative embodiment of the invention the energy absorption system has bridge elements provided with at least one deviation, formed to cause at least two bridge elements to deform controllably inwards, in order to absorb energy, when said energy absorption system is subject to impact of a substantially vertical force. This embodiment of the invention is e.g. suitable for locations where it is not desirable that the bridge elements expand sideways outwards during deformation.

There is also according to the present invention provided a vehicle comprising an energy absorption system comprising at least two connecting elements arranged in a motor vehicle, wherein said connecting elements are mutually connected to each other by bridge elements propagating substantially in the intended deformation direction of the energy absorption system, said energy absorption system comprising a retaining element arranged substantially perpendicular to said bridge elements and, when the energy absorption system being subject to a force impact, said retaining element being releasable at a given level of force impact, causing a controlled deformation of said energy absorption system. Such a vehicle will have a robust vehicle but yet with a deformable outer panel that will absorb the shock impact and minimise the injury to a pedestrian in case of a collision with said pedestrian. Hence it is suitable to arrange the energy absorption system between a panel and a support.

Finally, there are different ways of arranging the bridge element within the scope of protection. The deviation of the bridge element can also be realised in a number of ways e.g. as a bent sidewall. Alternatively the deviation of the bridge element can be realised as a bracket and preferably provided with a notch at the edge of said bracket. Further embodiments of the present invention can include a bridge element formed as a folded sidewall.

### Brief Description of the Drawings

A currently preferred embodiment of the present invention will now be described in more detail, with reference to the accompanying drawings.

Fig. 1 is a perspective view of an example of a vehicle appropriate for an energy absorption system according to an embodiment of the invention.

Fig. 2 is a perspective view of a first embodiment of an energy absorption system according to the present invention.

Fig. 3 shows a course of events for an embodiment of the present invention when subject to a vertically applied force.

Fig. 4 is a schematic plot of force versus time according to the inventive idea.

Fig. 5 is a perspective view of a second embodiment of an energy absorption system according to the present invention.

Fig. 6a is a perspective view of a third embodiment of an energy absorption system according to the present invention.

Fig. 6b is a side view of a third embodiment of an energy absorption system according to the present invention.

Fig. 7a is a perspective view of a fourth embodiment of an energy absorption system according to the present invention.

Fig. 7b is a side view of a fourth embodiment of an energy absorption system according to the present invention.

Fig. 8a is a perspective view of a fifth embodiment of an energy absorption system according to the present invention.

Fig. 8b is a side view of a fifth embodiment of an energy absorption system according to the present invention.

Fig. 9a is a perspective view of a sixth embodiment of an energy absorption system according to the present invention.

Fig. 9b is a side view of a sixth embodiment of an energy absorption system according to the present invention.

Fig. 10 is a sectional view of an energy absorption system supporting a fender.

### Detailed Description of Preferred Embodiments

A first embodiment of the invention related to an energy absorption system for a vehicle will be described in more detail in the following with reference to the accompanying drawings.

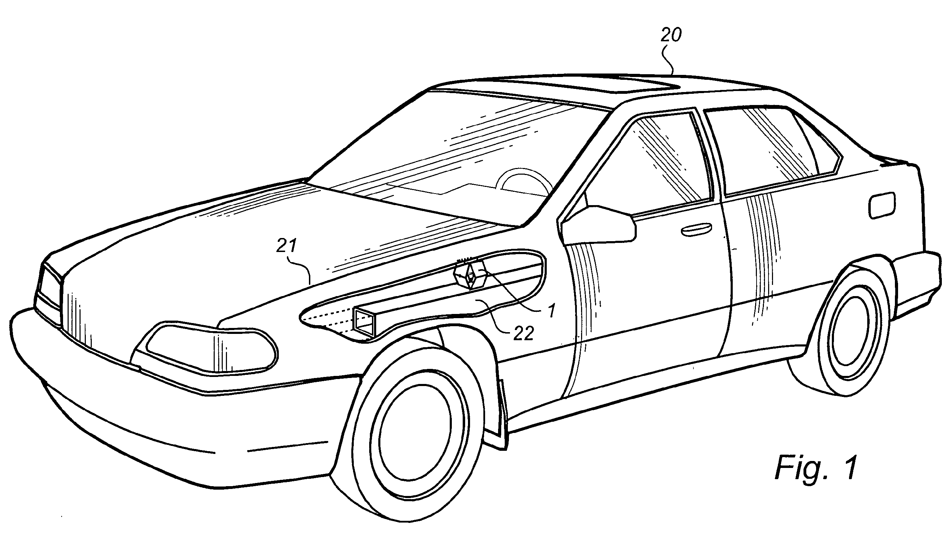

Referring now to Fig. 1, an energy absorption system 1 located within a vehicle 20 is shown. The energy absorption system 1 is arranged between an upper support 22 and a panel 21. Preferably the panel consists of e.g. a hood or a fender of the front of the vehicle 20.

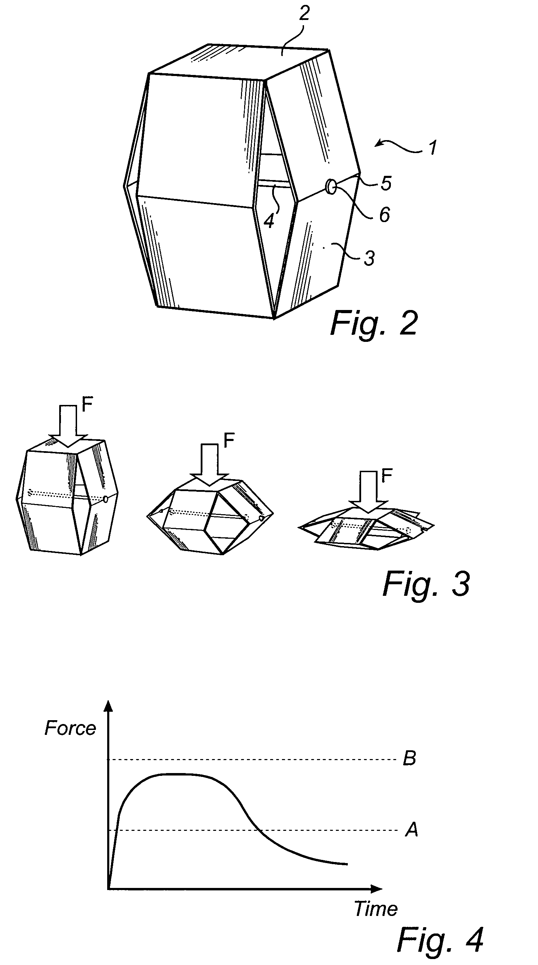

Fig. 2 shows a first embodiment of the energy absorption system 1 comprising connecting elements 2 mutually connected by bridge elements 3. The connecting elements 2 (although not shown here specifically) is conveniently fitted with connecting devices for attachment to adjacent structures such as panels and supports as indicated above. There exist alternative solutions, within the scope of the invention, on how to attach the connecting elements 1 to the support 22. It is appreciated that the energy absorption system 1 can be attached by e.g. screws, pop rivets, a weld etc. to the support 22. If desirable the energy absorption system 1 can also be attached to the panel 21 in the other connecting element 2 in a similar manner. By fitting the energy absorption system 1 between a support 22 and a panel 21 and attaching the energy absorption system 1 in at least said support 22, necessary vertical support for stability reasons is provided to the panel 21 resting on said energy absorbing element 1. The energy absorption system 1 comprises four bracket-shaped bridge elements 3. The edge 5 of the bracket-shaped bridge element 3 is indicated by numeral 5. By a bracket-shaped element it is to be understood in the present application an element forming an elbow or rather an obtuse angle at a location along the extension of said element between the connecting elements 2. Preferably, the edge 5 of the formed obtuse angle of the element is arranged near the centre of the element taken from the connecting elements 2. Substantially perpendicular to the intended deformation direction, which will be described later, is a retaining element 4 fitted and attached between two of the bridge elements 3 at an attachment location 6 at or adjacent said edge 5.

Fig. 3 shows a course of events for an embodiment of the energy absorption system 1 when subject to a vertically applied force F. The retaining element 4 is designed to come off at one of its attachments 6 when the energy absorption system 1 is exposed to a force impact exceeding a predetermined force impact. According to preferred embodiment of the invention the retaining element may come off by pulling a head of the retaining element 4 through the bridge element 3 at a predetermined load. In an alternative embodiment the head of the retaining element 4 breaks off at a given force. In a second alternative embodiment of the present invention the retaining element 4 breaks off at a given load impact.

As can be seen in the above given embodiments it is considered preferred, although other possibilities are not excluded within the scope of the invention, to use a pulling force to actuate the retaining element. The energy absorption system 1 is then being deformed offering some resistance in order to absorb impact energy from the applied force F. In this first embodiment of the invention the bridge elements 3 are being deformed outwards.

In Fig. 4 a schematic plot of force versus time illustrates a desired behaviour of the energy absorption system 1 when exposed to a vertical load. Line A in the plot indicates a first level of ordinary requirements for stiffness and stability of a front hood of a vehicle. Up to this first level, the retaining device 4 and the stiffness of the energy absorption system 1 are sufficient to withstand any load impact on the panel of the vehicle. The second level B indicates a level where there is a serious risk of head injuries. One of the advantages of the energy absorption system 1 according to the invention is that the retaining device can be adapted to a different level if research results or requirements in the future indicate that a certain level is preferred. The retaining device and also the stiffness of the energy absorption system 1 in the deformation direction are conveniently adaptable with good accuracy for a certain level. Hence the deformation behaviour of the energy absorption system 1 according to the invention is controllable and the behaviour during deformation is schematically sketched in the plot.

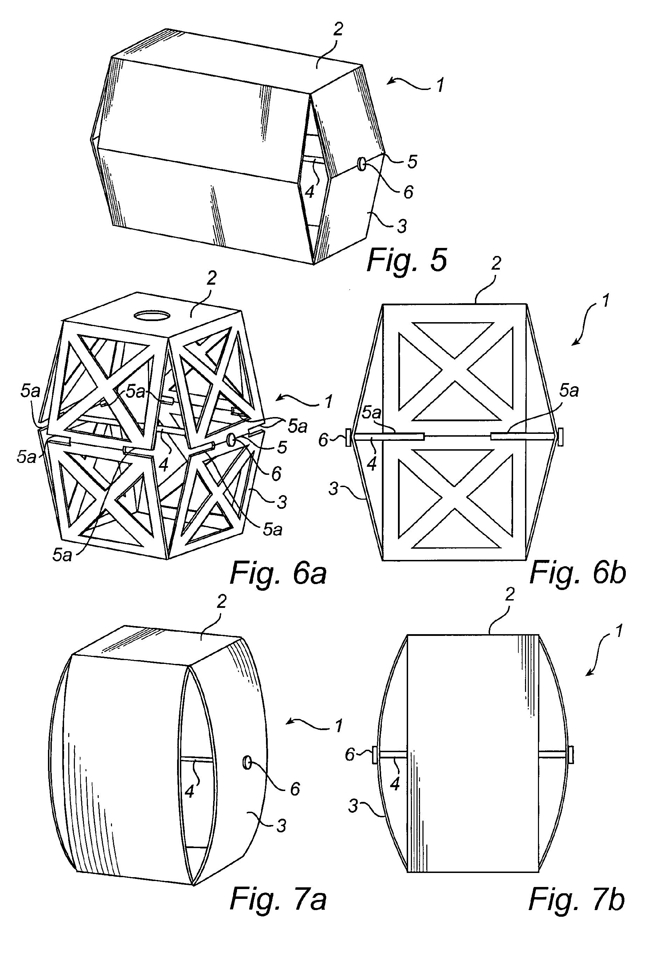

In Figs 5a and b, a second embodiment of the invention is shown. The second embodiment has an elongated shape compared to the first embodiment of the invention. The corresponding features of the second embodiment that can be found in the first embodiment are given the same numerals and will not be described again. It is possible to cover a larger area or a differently shaped panel area with the second embodiment of the invention due to the fact that the connecting elements 2 have a different area.

Figs 6a and b disclose a third embodiment according to the present invention. In this third embodiment of the energy absorption system 1, the bridge element 3 is built up from a framework structure. Again the bridge elements 3 are formed substantially as a bracket with the edge 5 directed outwards in the middle of the energy absorption system 1. The corresponding features of the third embodiment that are to be found in the first embodiment are given the same numerals and will not be described again.

A fourth embodiment of the energy absorption system 1 according to the invention is shown in Figs 7a and 7b. In this embodiment of the invention the bridge elements 3 are bent in order to trigger the deformation of the bridge elements 3 in a desired direction. The corresponding features of the fourth embodiment that are to be found in the first embodiment are given the same numerals and will not be described again.

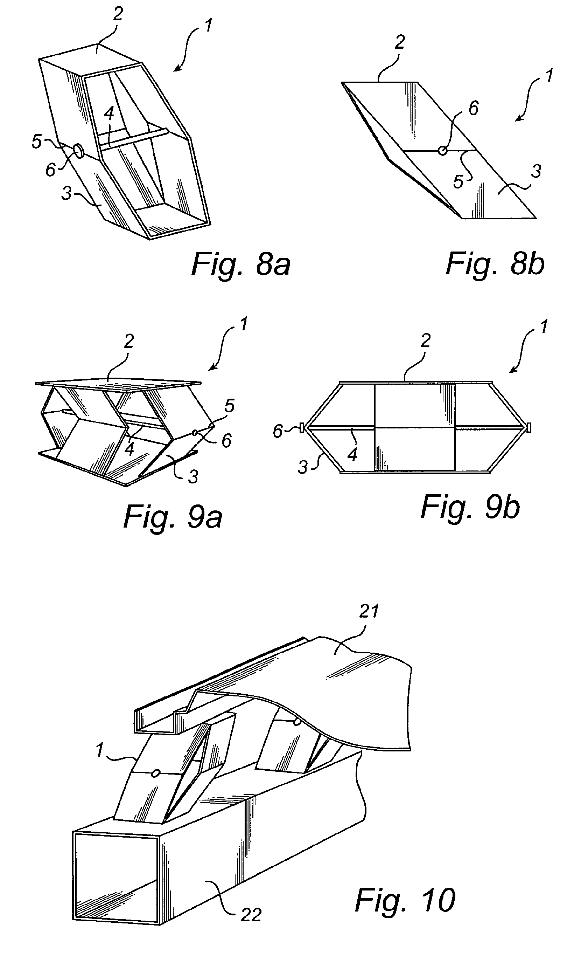

In Figs 8a and 8b a fifth embodiment of the present invention is shown. Compared to the previous embodiments the present embodiment is inclined along the deformation length. In many vehicles the support and the fender are shifted in relation to each other and hence there is a need for an energy absorption system 1 with the possibility of being inserted with shifted connecting elements. Further, the fifth embodiment of the energy absorption system 1 comprises three bridge elements 3. Two of the bridge elements 3 are connected with a retaining device 4 and the third bridge element provides additional stiffness, especially sideways, to the energy absorption system 1. As in the third embodiment, less material is used in this fifth embodiment.

Finally, in Figs 9a and 9b a sixth embodiment of the energy absorption system 1 according to the invention is shown. In this embodiment one pair of the bridge elements 3 are deformable inwards while the other pair of the bridge elements 3 are deformable outwards. The bridge elements 3 are also leaving the corners of the connecting elements 2 accessible. By providing more space and making the connecting elements more accessible from both sides it makes it easier to assemble and install the energy absorption system The corresponding features of the sixth embodiment that are to be found in the first embodiment are given the same numerals and will not be described again. The side stiffness of the energy absorption system 1 is substantially greater than the force impact level value for the retaining element 4. Between 5 and 50 and preferably around 20 times stronger side stiffness than the breaking limit of the retaining element 4 is desirable.

Fig. 10 shows an alternative embodiment of the invention, where a tilted embodiment of the energy absorption system 1 according to the invention is connected to a fender 21 in its upper end and to a support 22 in its lower end. It is also possible, although not preferred, to use the energy absorption system 1 for energy absorption of other panels than a fender such as e.g. a hood. From figure 10 it can also be seen that it is possible according to the invention to use a plurality of energy absorption systems arranged in a pattern in order to provide support and energy absorption in selected areas of the vehicle. By fitting one of the energy absorption systems 1 with a high degree of precision between a panel 21 and a support 22 necessary support to the panel 21 is accomplished. Additional energy absorption is possibly achieved by installing other energy absorption systems 1 of lower type at desired locations. The height of said other energy absorption systems 1 are lower than the original distance between the panel and the support leaving a space between preferably the panel 21 and the upper connecting element 2. With this alternative solution with energy absorption systems 1 of different precision energy absorption is hence possibly provided in a simpler and less costly manner, where additional energy absorption is desirable.

Although the present invention has been described in connection with particular embodiments thereof, it is to be understood that various modifications, alterations and adaptations may be made by those skilled in the art without departing from the spirit and scope of the invention.

Thus, there exist alternative solutions and designs for making the retaining device come off, break or snap. It is also appreciated that the above-described energy absorption system 1 is not limited to a specific force level. It is also understood that the energy absorption system 1 can be fitted between a panel and a support in a number of ways. Preferably, the energy absorption system 1 is fitted fixedly to a support 22 providing support for a fender 21 resting on the topside of a connecting element 2 of said energy absorption system 1.

## Claims

1. An energy absorption system (1) comprising at least two connecting elements (2) arranged in a motor vehicle (20), wherein said connecting elements (2) are mutually connected by bridge elements (3) propagating substantially in an intended deformation direction of the energy absorption system (1), said energy absorption system (1) comprising a retaining element (4) arranged substantially perpendicular to said bridge elements (3) and, when the energy absorption system (1) being subject to a force impact in the intended deformation direction, said retaining element (4) being releasable at a given level of force impact, causing a controlled deformation of said energy absorption system (1).

2. An energy absorption system (1) according to claim 1, comprising at least two bridge elements (3) that somewhere along their extensions deviate from the propagation direction of a straight line between said connecting elements (2), said deviation (5) forming a predetermined deformation path of each of the bridge elements (3).

3. An energy absorption system (1) according to any one of claims 1-2, wherein the bridge elements (3) are arranged at an angle relative to each other, providing side stiffness to the energy absorption system (1).

4. An energy absorption system (1) according to any one of claims 1-3, wherein the side stiffness of the energy absorption system (1) is substantially greater than the force impact level value for the retaining element (4).

5. An energy absorption system (1) according to any one of the preceding claims, wherein said energy absorption system (1) has three bridge elements (3) connected to a connecting element (2), in their respective ends, said bridge elements (3) being substantially perpendicular to each other at least close to their ends.

6. An energy absorption system (1) according to any one of the preceding claims, wherein said energy absorption system (1) has four bridge elements (3) connected to a connecting element (2), in their respective ends, said bridge elements (3) being substantially perpendicular to each other at least close to their respective ends.

7. An energy absorption system (1) according to any one of the preceding claims, wherein said energy absorption system (1) has bridge elements (3) provided with at least one deviation (5), formed to cause the bridge elements (3) to deform controllably outwards, in order to absorb energy, when said energy absorption system (1) is subject to impact of a substantially vertical force.

8. An energy absorption system (1) according to any one of the preceding claims, wherein said energy absorption system (1) has bridge elements (3) provided with at least one deviation (5), formed to cause at least two bridge elements (3) to deform controllably inwards, in order to absorb energy, when said energy absorption system (1) is subject to impact of a substantially vertical force.

9. A vehicle (20) provided with an energy absorption system (1) comprising at least two connecting elements (2) arranged in a motor vehicle (20), wherein said connecting elements (2) are mutually connected to each other by bridge elements (3) propagating substantially in the intended deformation direction of the energy absorption system (1), said energy absorption system (1) comprising a retaining element (4) arranged substantially perpendicular to said bridge elements (3) and, when the energy absorption system (1) being subject to a force impact, said retaining element (4) being releasable at a given level of force impact, causing a controlled deformation of said energy absorption system (1).

10. A vehicle (20) according to claim 9, wherein said energy absorption system (1) is arranged between a panel (21) and a support (22).
